# FASCICULE DE BREVET EUROPEEN

(11) **EP 3 625 624 B1**
(45) Date de publication et mention de la délivrance du brevet: **08.01.2025**
(21) Numéro de dépôt: 18725226.7
(22) Date de dépôt: 17.05.2018
(51) Int. Cl.: G03B 17/08, B60R 11/04, B08B 7/00

(54) **DISPOSITIF DE PROTECTION D'UN CAPTEUR OPTIQUE**
SCHUTZVORRICHTUNG FÜR EINEN OPTISCHEN SENSOR.
PROTECTIVE DEVICE FOR AN OPTICAL SENSOR.

(30) Priorité: 17.05.2017 FR 1754343
(43) Date de publication de la demande: 25.03.2020
(73) Titulaire: Valeo Systèmes d'Essuyage, 78322 Le Mesnil Saint Denis (FR)
(72) Inventeur: BRETAGNOL, Frédéric, 63500 Issoire (FR); TREBOUET, Marcel, 78322 Le Mesnil Saint Denis (FR)
(74) Mandataire: Valeo Visibility
(86) Numéro de dépôt international: PCT/EP2018/062884
(87) Numéro de publication internationale: WO 2018/211004

(56) Documents cités:
- KR-A- 20070 034 729
- US-A- 3 879 742
- US-A- 5 315 333
- US-A1- 2007 217 782
- US-A1- 2011 181 725

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant un objectif, notamment comprenant au moins une lentille. Plus particulièrement, l'invention concerne un dispositif de protection d'un tel capteur optique.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connait des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des coûts de fonctionnement d'un tel système d'assistance à la conduite car ils nécessitent l'utilisation de quantités de liquide de nettoyage assez importantes.

Dernièrement, la demanderesse a développé un autre dispositif de nettoyage de l'optique de caméra, qui comporte un boitier monté mobile en rotation autour d'un axe de rotation et qui présente un logement configuré pour recevoir un capteur optique, un élément optique solidaire du boitier, l'élément optique présentant au moins une surface transparente disposée dans le champ de vision du capteur optique et un actionneur couplé au boitier pour entrainer en rotation le boitier et l'élément optique et permettre ainsi l'élimination des salissures par un effet centrifuge. Le document WO2018/019662 divulgue un tel dispositif de nettoyage.

D'autres exemples de dispositifs de protection de capteurs optiques sont décrits dans les documents US2007217782 US2011181725 et KR200700347299.

L'invention vise à protéger une alternative au dispositif de nettoyage illustré dans ce document, qui se distingue notamment dans la forme de l'actionneur et sa coopération avec le boîtier.

Dans ce contexte, un premier mode de réalisation selon l'invention vise un dispositif de protection d'un capteur optique pour véhicule automobile, ledit capteur optique comprenant une optique, le dispositif comportant :
un boitier monté mobile en rotation autour d'un axe de rotation et présentant un logement configuré pour recevoir le capteur optique,
un élément optique solidaire du boitier et configuré pour être disposé dans le champ de vision du capteur optique, et
un actionneur couplé au boitier pour entrainer en rotation le boitier et l'élément optique, l'actionneur comportant un rotor et un stator configurés de sorte que l'actionneur est un moteur à rotor interne,
le dispositif de protection étant caractérisé en ce que le boîtier est directement fixé sur le rotor et en ce que le rotor comporte trois portions successives formant une portion d'actionnement portant une masse magnétique, une portion de guidage et une portion d'entraînement reliée de façon solidaire au boîtier.

De préférence, au moins une partie du rotor s'étend à l'intérieur d'un volume défini par le stator, ladite au moins partie de rotor portant une masse magnétique

De façon avantageuse, l'invention permet ainsi de disposer la partie tournante au centre du moteur, ce qui permet de diminuer les bruits et le balourd induits par la rotation du rotor porteur d'une masse magnétique.

Cette caractéristique s'accompagne notamment d'un profil étagé du rotor et le cas échéant d'une pièce intermédiaire associé à ce rotor, afin de permettre à une extrémité d'être solidaire en rotation du boîtier qui doit être suffisamment grand pour entourer le capteur optique et à l'extrémité opposé d'être le plus proche possible de l'axe de rotation du boitier afin de diminuer l'encombrement global de l'actionneur.

Le boîtier peut être directement fixé sur le rotor. Dans ce cas, le rotor peut comporter trois portions successives formant, une portion d'actionnement portant une masse magnétique, une portion de guidage et une portion d'entraînement reliée de façon solidaire au boîtier. De préférence, la portion d'entraînement présente un diamètre moyen de valeur supérieure à la valeur du diamètre moyen de la portion d'actionnement. De préférence, un tel rotor est en une seule pièce.

Un deuxième mode de réalisation selon l'invention vise un dispositif de protection d'un capteur optique pour véhicule automobile, ledit capteur optique comprenant une optique, le dispositif comportant:
- un boitier monté mobile en rotation autour d'un axe de rotation et présentant un logement configuré pour recevoir le capteur optique,
- un élément optique solidaire du boitier et configuré pour être disposé dans le champ de vision du capteur optique, et
- un actionneur couplé au boitier pour entrainer en rotation le boitier et l'élément optique, l'actionneur comportant un rotor et un stator configurés de sorte que l'actionneur est un moteur à rotor interne,
le dispositif de protection étant caractérisé en ce qu'il comporte une pièce intermédiaire formant liaison entre le boîtier et le rotor, en ce que le rotor comporte une portion d'actionnement portant une masse magnétique et en ce que la pièce intermédiaire comporte une portion d'entraînement (513) reliée de façon solidaire au boîtier et une portion de guidage reliant la portion d'entraînement à la portion d'actionnement du rotor.

La pièce intermédiaire peut en outre présenter une couronne de recouvrement prolongeant la portion de guidage et recouvrant l'une des extrémités du stator.

Selon différentes caractéristiques de l'invention, prises seules ou en combinaison, on peut prévoir que :
- l'actionneur est un moteur creux ;
- le capteur optique est prolongé à une extrémité axiale par une queue de support logé au moins partiellement à l'intérieur du rotor interne au moteur creux ;
- le dispositif de protection comporte une partie mobile et une partie fixe, la partie mobile comportant au moins le rotor et le boîtier, et la partie fixe comportant au moins le stator, et le dispositif de protection comporte au moins un roulement, de préférence deux, agencés entre la partie mobile et la partie fixe ;
- au moins l'un des roulements est agencé entre le rotor et la queue de support ;
- le stator comporte une paroi transversale perpendiculaire à l'axe de rotation du boitier et disposée à l'opposé de l'élément optique, la paroi transversale comportant un manchon de réception d'une extrémité de la queue de support.

L'invention concerne également un système d'assistance à la conduite comportant un capteur optique comprenant une optique. Selon l'invention, ledit système comporte en outre un dispositif de protection du capteur optique tel que défini précédemment.

D'autres caractéristiques et avantages de l'invention apparaitront plus clairement à la lecture de la description suivante, donnée à titre d'exemple illustratif et non limitatif, et des dessins annexés parmi lesquels :
- la figure 1 représente de façon schématique un véhicule automobile comprenant un système d'assistance à la conduite selon l'invention,
- la figure 2 est une vue en perspective d'un dispositif de protection d'un capteur optique du système d'assistance de la figure 1,
- la figure 3 est une vue en coupe longitudinale partielle du dispositif de protection de la figure 2 selon un premier mode de réalisation,
- la figure 4 est une vue en coupe longitudinale partielle du dispositif de protection de la figure 2 selon un deuxième mode de réalisation.

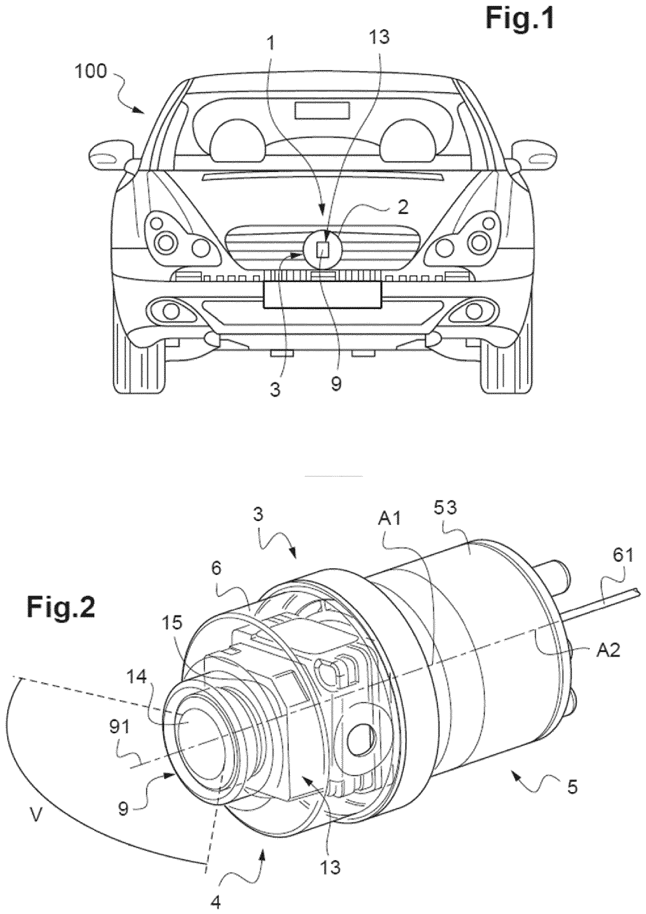

La figure 1 montre un véhicule automobile 100 équipé d'au moins un système d'assistance à la conduite 1 selon l'invention. Le système d'assistance à la conduite 1 comporte notamment au moins un capteur optique 13 et un dispositif de protection 3, mieux visible sur les figures 2 à 4, entourant le capteur optique 13.

Selon l'exemple illustré sur la figure 1, le système d'assistance à la conduite 1 est monté à l'avant du véhicule 100 au niveau d'un pare-chocs. Bien entendu, en variante le dispositif de protection 3 peut être monté à l'arrière du véhicule 100, par exemple au niveau du pare-chocs ou de la plaque d'immatriculation. Il peut aussi par exemple être monté sur les côtés du véhicule, par exemple au niveau des rétroviseurs.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

Le dispositif de protection 3 est configuré et dimensionné pour recevoir et loger le capteur optique 13.

Le capteur optique 13 est par exemple un capteur optique de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light détection and ranging".

Comme cela est mieux visible sur la figure 2, le capteur optique 13 comporte une optique 14 d'axe optique 15. L'optique 14 est par exemple un objectif. Un objectif peut comporter au moins une lentille, en particulier plusieurs lentilles suivant le champ de vision et la résolution, par exemple entre deux et dix lentilles, généralement quatre ou cinq lentilles, voire dix lentilles dans le cas d'une optique dite oeil de poisson ("fish-eye" en anglais). Au moins une des lentilles de l'optique 14 est par exemple convexe (bombée) de convexité orientée vers l'extérieur du capteur optique 13, telle qu'une optique dite oeil de poisson ("fish-eye" en anglais).

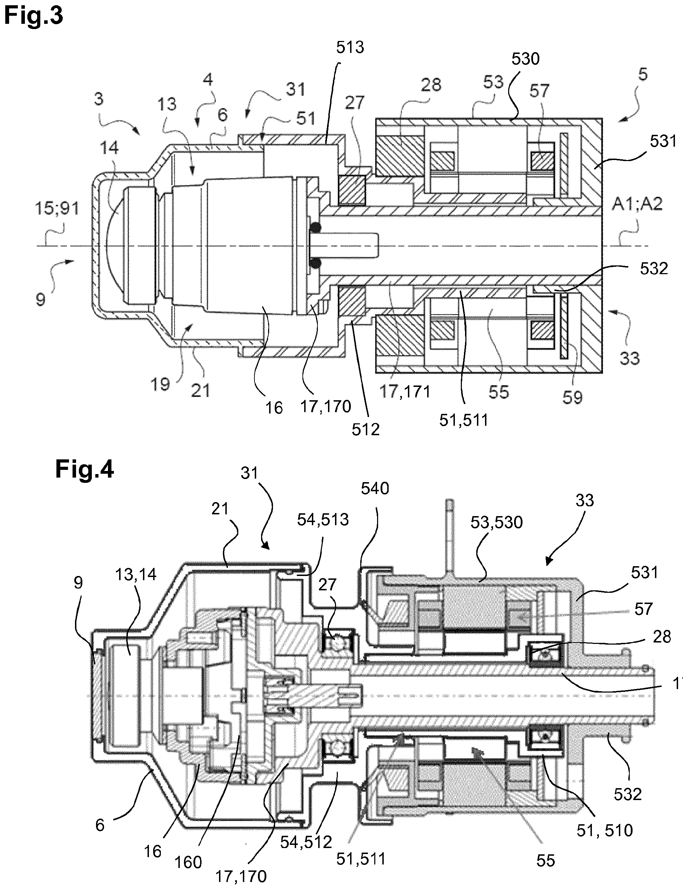

L'optique 14 est montée à une première extrémité, à savoir l'extrémité avant, d'un corps de capteur 16 dans lequel est notamment disposée une unité électronique 160 de pilotage de l'optique. Par ailleurs, le corps de capteur est prolongé axialement, c'est à dire dans la direction parallèle à l'axe optique 15, vers l'arrière, c'est-à-dire à l'opposé de l'optique 14, par une partie formant support 17 (visible sur les figures 3 et 4) du capteur optique 13.

Le support 17 présente une forme de révolution autour de l'axe optique 15, avec une embase 170 fixée sur le corps de capteur 16 et une queue de support 171 qui prolonge axialement l'embase. La queue de support 171 est creuse et elle permet le passage de câbles reliant l'unité électronique 160 de pilotage de l'optique à un réseau du véhicule par l'intermédiaire de câbles ici non représentés.

Le dispositif de protection 3 comporte au moins un accessoire 4 monté mobile en rotation autour d'un axe de rotation A1 et ayant pour fonction la protection du capteur optique 13, et un actionneur, plus précisément un moteur 5, configuré pour entrainer en rotation l'accessoire 4. Le dispositif de protection 3 est donc un dispositif motorisé.

L'accessoire 4 du dispositif de protection 3 comporte un boitier 6 et un élément optique 9 solidaire du boitier 6, avec dans les modes de réalisation illustrés un élément optique 9 réalisé d'une seule pièce avec le boitier 6. En alternative, le boitier 6 et l'élément optique 9 peuvent être réalisés par deux pièces distinctes solidarisées.

L'élément optique 9 et le boitier 6 sont décrits plus en détail ci-après.

En ce qui concerne le boitier 6, il est monté mobile en rotation autour d'un axe de rotation A1 sensiblement parallèle, le cas échéant confondu avec l'axe optique 15.

De préférence, le boitier 6 est un boitier étanche. Le boitier 6 peut être réalisé en tout matériau approprié connu de l'homme du métier.

Plus précisément, ce boitier 6 est agencé de façon à être entrainé en rotation par le moteur 5, ce qui permet la rotation de l'élément optique 9. L'élément optique 9 est donc dans cet exemple particulier, configuré pour être entrainé en rotation avec le boitier 6, de façon à permettre un nettoyage de l'élément optique 9 par effet centrifuge.

L'élément optique 9 est configuré pour être disposé à l'avant du boitier 6. L'avant du boitier 6 s'entend de la partie du boitier 6 destinée à faire face à la scène de route dont le capteur optique 13 participe à la prise de vues, lorsque le dispositif de protection 3 est monté sur le véhicule 100 (en se référant également à la figure 1). Par opposition, l'arrière du boitier 6 s'entend de la partie du boitier 6 opposée à l'avant du boitier 6 et est donc la partie la plus éloignée de la scène de route dont le capteur optique 13 participe à la prise de vues.

Tel qu'illustré, le capteur optique 13 est monté dans le dispositif de protection de sorte que le corps de capteur 16 est logé au moins en partie dans le boitier 6 tandis que l'optique 14 est en regard de l'élément optique 9. Pour ce faire, le boitier 6 est configuré de manière à former un logement 19 (voir figure 3) dimensionné pour recevoir le capteur optique 13, par exemple de sorte que l'axe optique 15 du capteur optique 13, soit confondu avec l'axe de rotation A1 du boitier 6.

Plus précisément, le boitier 6 comporte une paroi 21 définissant le logement 19 pour le capteur optique 13. Cette paroi 21 peut être centrée autour de l'axe de rotation A1 de l'élément optique 9 et du boitier 6. Dans cet exemple, la paroi 21 est de forme générale sensiblement cylindrique.

Selon une première variante, la paroi 21 peut être réalisée d'une seule pièce avec l'élément optique 9. Selon une deuxième variante, la paroi 21 et l'élément optique 9 peuvent être réalisées par deux pièces distinctes, et dans ce cas l'élément optique 9 est rendue solidaire de la paroi 21 à une extrémité avant de cette dernière. À titre d'exemple non limitatif, la solidarisation entre la paroi 21 et l'élément optique 9 peut se faire par soudure par ultrasons. Ainsi, le boitier 6 et l'élément optique 9 peuvent être réalisés en une ou plusieurs pièces. Le boitier 6 étant solidaire de l'élément optique 9, cela forme un bloc étanche empêchant ainsi l'introduction de salissures à l'intérieur du boitier 6 destiné à recevoir le capteur optique 13.

L'élément optique 9, quant à lui, est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien des projections d'eau, de polluants, de graviers que des dépôts de polluants ou des traces d'eau.

Selon le mode de réalisation décrit, l'élément optique 9 est distinct du capteur optique 13.

Cet élément optique 9 présente un axe optique 91.

L'élément optique 9 est agencé à l'avant du dispositif de protection 3. Autrement dit, l'élément optique 9 est agencé à l'avant du boitier 6. L'avant du dispositif de protection 3 s'entend de la partie destinée à faire face à la scène de route dont le capteur optique 13 participe à la prise de vues, lorsque le dispositif de protection 3 est monté sur le véhicule 100 (figure 1). Par opposition, l'arrière du dispositif de protection 3 est la partie opposée à l'avant et à l'élément optique 9 ; il s'agit donc la partie la plus éloignée de la scène de route dont le capteur optique 13 participe à la prise de vues.

L'élément optique 9 est destiné à être disposé en amont du capteur optique 13, plus précisément en amont de l'optique 14 (figures 2 et 3). Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15.

Cet élément optique 9 est avantageusement dimensionné de façon à recouvrir toute la surface de l'optique 14. L'élément optique 9 est donc agencé dans le champ de vision du capteur optique 13. À cet effet, l'élément optique 9 est avantageusement transparent afin de ne pas nuire à l'efficacité du capteur optique 13. Cet élément optique 9 peut être réalisé en verre ou en un matériau plastique transparent tel que du polycarbonate.

L'élément optique 9 peut être agencé de façon centrée par rapport au capteur optique 13, plus précisément de façon centrée par rapport à l'optique 14. L'élément optique 9 est agencé de sorte que son axe optique 91 est confondu avec l'axe optique 15 du capteur optique 13.

Comme dit précédemment, l'élément optique 9 est solidaire du boitier 6, il est donc solidaire en rotation du boitier 6. Ainsi, l'élément optique 9 est également monté mobile en rotation autour de l'axe de rotation A1. Plus précisément, le boitier 6 peut être agencé de façon à être entrainé en rotation par le moteur 5, ce qui permet la rotation de l'élément optique 9. L'élément optique 9 est donc configuré pour être entrainé en rotation avec le boitier 6, de façon à permettre un nettoyage de de l'élément optique 9 par un effet centrifuge.

Avantageusement, l'axe de rotation A1 de l'élément optique 9 est confondu avec l'axe optique 15 du capteur optique 13. Cet axe de rotation A1 est également confondu avec l'axe optique 91 de l'élément optique 9.

L'élément optique 9 peut être disposé de façon centrée par rapport à l'axe de rotation A1. Cet élément optique 9 présente notamment une symétrie de révolution par rapport à l'axe de rotation A1.

Par ailleurs, lorsque le dispositif de protection 3 recevant le capteur optique 13 est monté sur le véhicule 100 (en se référant également à la figure 1), l'optique 14 et l'élément optique 9 font avantageusement saillie d'une ouverture prévue sur l'élément 2 du véhicule 100.

On va maintenant décrire plus en détails le moteur 5, en se référant notamment à un premier mode de réalisation illustré sur la figure 3 et un deuxième mode de réalisation illustré sur la figure 4.

Le moteur 5 est assemblé à l'arrière du boitier 6, c'est-à-dire du côté opposé à l'élément optique 9. Plus particulièrement, le moteur 5 est agencé dans le prolongement du capteur optique 13. On forme ainsi un bloc étanche empêchant ainsi l'introduction de salissures à l'intérieur du boitier 6 destiné à recevoir le capteur optique 13. On peut prévoir un agencement étanche à l'arrière du moteur 5 pour le passage des câbles ou fils afin de limiter l'entrée de vapeur d'eau et/ou autres contaminants à l'intérieur du dispositif de protection 3.

Le moteur 5 peut notamment être un moteur électrique de petite taille, voire miniature.

Par moteur électrique de petite taille on entend dans le cadre de la présente invention un moteur pas à pas, un actuateur, un moteur à courant continu avec ou sans balai, un moteur asynchrone ou un moteur synchrone, dont la masse est inférieure à 10kg, voire inférieure à 1kg, en particulier utilisés pour actionner des équipements pour les véhicules.

Par moteur électrique miniature on entend dans le cadre de la présente invention un moteur pas à pas, un actuateur, un moteur à courant continu avec ou sans balais, un moteur asynchrone ou un moteur synchrone, dont la masse est inférieure à 200g, voire inférieure à 100g, de préférence comprise entre 30 g et 100g, par exemple entre 30 g et 60g.

Le moteur 5 comporte un rotor 51 et un stator 53 fixe, le rotor 51 étant mobile en rotation par rapport au stator fixe 53. À titre d'exemple non limitatif, le moteur 5 peut être plus particulièrement un moteur sans balais, aussi connu sous la dénomination « brushless motor » en anglais.

Le moteur 5 est fixé à un élément de structure du véhicule ici non représenté, par l'intermédiaire du stator et ce moteur 5 est couplé au boitier 6 pour entrainer en rotation le boitier 6 et l'élément optique 9. Le boitier 6 et l'élément optique 9 sont solidaires du rotor 51 du moteur 5^{.}

Le moteur 5 est ainsi configuré et dimensionné pour entrainer en rotation le boitier 6 et l'élément optique 9 solidaire du boitier 6.

Le moteur 5 est monté rotatif autour d'un axe de rotation A2. Le moteur 5 est par exemple agencé de sorte que son axe de rotation A2 est confondu avec l'axe de rotation A1 de l'élément optique 9, et avec l'axe optique 15 du capteur optique 13, ainsi qu'avec l'axe optique 91 de l'élément optique 9.

Le moteur 5 est avantageusement un moteur 5 creux. Il peut recevoir au moins en partie le capteur optique 13 et plus particulièrement la queue de support 17. De la sorte, le moteur 5 creux peut être traversé par la queue de support et donc, tel que cela a été décrit précédemment par des câbles reliant l'unité électronique 160 de pilotage de l'optique à un réseau du véhicule.

Selon l'invention, le moteur 5 est un moteur à rotor interne, c'est-à-dire que le stator 53 est agencé autour d'au moins une partie du rotor 51.

Selon l'invention, le rotor 51 est creux et ménage un passage central pour la queue de support 17. Un jeu est prévu entre la surface externe de la queue de support et la face interne délimitant le passage central du rotor 51, afin de permettre la rotation du rotor 51 autour de la queue de support 17.

Dans les exemples illustrés, le moteur 5 comprend au moins un aimant 55 solidaire en rotation du rotor 51, et un nombre prédéfini de bobines électromagnétiques 57, en particulier au moins quatre bobines électromagnétiques 57 montées sur le stator 53. Les bobines électromagnétiques 57 sont destinées à être alimentées pour permettre l'entrainement de l'aimant 55 solidaire du rotor 51. Le moteur 5 comprend à cet effet un circuit de commande 59 pour l'alimentation des bobines électromagnétiques 57. Ce circuit de commande 59 peut être relié à un faisceau d'alimentation électrique 61 relié au circuit électrique général du véhicule 100 (en se référant à la figure 2).

Il résulte de ce qui précède et de la description commune aux différents exemples de réalisation que le dispositif de protection 3 comporte une partie mobile 31, aussi appelée partie tournante 31, et une partie fixe 33 (voir figure 3).

La partie mobile 31 comprend d'une part au moins le rotor 51 du moteur 5, et d'autre part au moins un élément mobile solidaire en rotation avec le rotor 51, tel que notamment le boitier 6 et l'élément optique 9 associé.

Par ailleurs, la partie fixe 33 comprend d'une part au moins le stator 53 du moteur 5 et d'autre part au moins un élément ou support fixé au stator 53. Dans l'exemple illustré, la partie fixe 33 du dispositif motorisé 3 comporte la queue de support 17 solidaire du capteur optique 13, cette queue de support 17 étant fixée au stator 53.

Afin d'assurer la rotation de la partie mobile 31, le dispositif de protection 3 peut comprendre en particulier un ou plusieurs roulements 27, 28 représentés de façon schématique sur les figures 3 et 4. Dans les exemples illustrés, sans qu'ils soient limitatifs, le dispositif de protection 3 comprend deux roulements 27, 28.

Ces roulements 27, 28 sont chacun agencés entre la partie mobile 31 et la partie fixe 33 du dispositif de protection 3. Les roulements 27, 28 sont de forme générale sensiblement annulaire. De plus, les deux roulements 27, 28 sont agencés de manière concentrique avec le moteur 5.

Un premier mode de réalisation du dispositif de protection est illustré en détails sur la figure 3.

Le stator 53 comporte une paroi périphérique 530 formant cylindre centré sur l'axe de rotation A2 et une paroi transversale 531 qui prolonge sensiblement perpendiculairement la paroi périphérique et qui délimite axialement le stator à une extrémité de cette paroi périphérique.

La paroi transversale présente un orifice centré sur l'axe de rotation A2 du moteur et dimensionné pour laisser passage à la queue de support 17 solidaire du capteur optique. Cet orifice est bordé par un manchon 532 qui prolonge la paroi transversale 531 vers l'intérieur du moteur. Ce manchon 532 est notamment configuré pour permettre la fixation du stator sur la queue de support 17. Le manchon entoure l'extrémité libre de la queue de support, à l'opposé du capteur optique. La fixation entre ces deux éléments est une fixation par emmanchement serré, ou par soudage sans que cela soit exhaustif dès lors que le stator et la queue de support forment ensemble partie de la partie fixe 33.

Tel qu'illustré, le manchon 532 peut servir de support à un circuit de commande 59 pour l'alimentation des bobines électromagnétiques 57.

Le rotor 51 présente lui une forme étagée avec trois portions distinctes.

Une première portion du rotor, disposée à l'intérieur du volume défini par le stator, consiste en une portion d'actionnement 511, portant l'aimant 55 permettant la mise en rotation du rotor à l'intérieur du stator. Cette première portion présente un premier diamètre dont la valeur est fonction de la valeur du diamètre de la queue de support 17, afin de permettre la rotation autour de cet élément fixe formé par la queue de support et de permettre un encombrement le plus petit possible du moteur.

Une deuxième portion du rotor, s'étendant à en partie à l'intérieur du volume défini par le stator et en partie à l'extérieur de celui-ci, consiste en une portion de guidage 512, sur laquelle reposent les roulements facilitant le guidage en rotation du rotor à l'intérieur du stator. Cette deuxième portion peut le cas échéant, tel qu'illustré sur la figure 3, présenter un épaulement formant des surfaces de butée pour la mise en position des roulements. Cette deuxième portion présente un deuxième diamètre moyen dont la valeur est supérieure à la valeur du premier diamètre de la portion d'actionnement 511, en formant de la sorte une marche entre la portion d'actionnement et une troisième portion du rotor.

La troisième portion du rotor, disposée à l'extérieur du volume défini par le stator, consiste en une portion d'entraînement 513, rendue solidaire à son extrémité libre à l'extrémité arrière de l'accessoire 4, ici l'extrémité libre du boîtier 6. Cette troisième portion présente un troisième diamètre dont la valeur, supérieure à la valeur de la deuxième portion du rotor, est fonction de la valeur du diamètre du boîtier 6, afin de permettre la solidarisation du rotor et du boîtier à faire tourner pour éliminer les salissures.

Dans ce mode de réalisation, les deux roulements sont disposés dans la zone de la portion de guidage 512 du rotor 51. Un premier roulement 27 est disposé à l'intérieur du rotor, entre la face interne de la portion de guidage et la queue de support 17, tandis qu'un deuxième roulement 28 est disposé sensiblement dans la même zone, cette fois en contact avec la surface externe de la portion de guidage 512, entre cette portion de guidage et la face interne de la paroi périphérique du stator.

Un deuxième mode de réalisation du dispositif de protection est illustré en détails sur la figure 4, et ce deuxième mode de réalisation diffère du premier mode de réalisation notamment en ce que le manchon 532 qui prolonge la paroi transversale 531 du stator est ici tourné vers l'extérieur. Comme précédemment, le manchon 532 entoure l'extrémité libre de la queue de support 17 et les deux éléments sont rendus solidaires.

Il résulte de ce qui précède un gain de place dans la zone en regard de la face interne de la paroi transversale, et le deuxième roulement 28 est dans ce mode de réalisation disposé dans cette zone. Plus particulièrement, le deuxième roulement 28 est disposé entre la queue de support 17 et une couronne 510 formée à l'extrémité du rotor disposée en regard de la paroi transversale 531 du stator, la couronne 510 présentant un plus grand diamètre que le reste de la portion d'actionnement 511 du rotor logé dans le volume interne du stator comme précédemment décrit. De la sorte, les deux roulements 27, 28 sont éloignés l'un de l'autre et disposés avantageusement à proximité des extrémités axiales du rotor, ce qui améliore les performances de guidage en rotation et donc les performances du moteur. Cette amélioration permet en outre d'utiliser des roulements de plus petite taille, ce qui a pour avantage de réduire les frottements mécaniques entre le rotor et la queue de support 1 .

Dans ce deuxième mode de réalisation, le moteur 5 diffère notamment dans le fait que le rotor 51 n'est pas directement relié au boîtier 6, mais par le biais d'une pièce intermédiaire 54.

Tel qu'illustré, c'est la pièce intermédiaire 54 qui comporte la portion de guidage 512 et la portion d'entraînement 513 reliée au boîtier 6. Dans ce deuxième mode réalisation, la pièce intermédiaire 54 comporte par ailleurs une couronne de recouvrement 540 qui prolonge la portion de guidage 512 pour venir recouvrir l'extrémité ouverte du stator, à l'opposé de la paroi transversale 531.

La pièce intermédiaire est soudée sur le rotor et forme avec celui-ci un ensemble solidaire en rotation pour entraîner le boîtier 6 et l'élément optique 9.

Avantageusement, cette pièce intermédiaire peut être réalisée dans un matériau différent de celui du rotor, ce qui peut améliorer la fixation du roulement 27 disposé entre la face interne de la portion de guidage 512 et la queue de support 17.

Un tel dispositif de protection de capteur optique possédant un moteur à rotor interne présente l'avantage d'avoir un aimant 55 disposé à l'intérieur de l'espace défini par les bobines électromagnétiques 57 du stator, ce qui permet d'utiliser un aimant de taille limité et donc de réduire la masse du dispositif de protection.

En fonctionnement, l'actionneur, plus précisément le moteur 5, entraine en rotation le boitier 6 et l'élément optique 9 solidaire du boitier 6, par rapport au capteur optique 13. La rotation du boitier 6 et de l'élément optique 9 assure l'élimination des salissures du fait de la force centrifuge que ces dernières subissent. Le champ de vision V du capteur optique 13 est ainsi toujours dégagé et propre.

La masse magnétique, c'est-à-dire l'aimant 55, est solidaire du rotor interne selon l'invention. Cette configuration est particulièrement avantageuse en ce que le balourd créé par la rotation de la masse magnétique est disposé au plus près de l'axe de rotation du moteur. Le bruit généré par la rotation de l'aimant est ainsi diminué.

La description qui précède explique clairement comment l'invention permet d'atteindre les objectifs qu'elle s'est fixée et notamment de proposer un dispositif de protection de capteur optique qui permette un nettoyage efficace d'un capteur d'un système d'assistance à la conduite, avec notamment un encombrement et des bruits de fonctionnement réduits.

L'invention ne saurait se limiter aux modes de réalisation spécifiquement donnés dans ce document à titre d'exemples non limitatifs, et s'étend en particulier à tous moyens équivalents et à toute combinaison techniquement opérante de ces moyens. Ainsi, les caractéristiques, les variantes et les différentes formes des modes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites, dès lors que, conformément à l'invention, le dispositif de protection comporte un moteur à rotor interne selon les revendications.

## Revendications

1. Dispositif de protection (3) d'un capteur optique (13) pour véhicule automobile (100), ledit capteur optique (13) comprenant une optique (14), le dispositif (3) comportant :
- un boitier (6) monté mobile en rotation autour d'un axe de rotation (A1) et présentant un logement (19) configuré pour recevoir le capteur optique (13),
- un élément optique (9) solidaire du boitier (6) et configuré pour être disposé dans le champ de vision du capteur optique (13), et
- un actionneur (5) couplé au boitier (6) pour entrainer en rotation le boitier (6) et l'élément optique (9), l'actionneur (5) comportant un rotor (51) et un stator (53) configurés de sorte que l'actionneur est un moteur à rotor interne,
le dispositif de protection (3) étant **caractérisé en ce que** le boîtier (6) est directement fixé sur le rotor (51) et **en ce que** le rotor (51) comporte trois portions successives formant une portion d'actionnement (511) portant une masse magnétique (55), une portion de guidage (512) et une portion d'entraînement (513) reliée de façon solidaire au boîtier (6).

2. Dispositif de protection (3) selon la revendication 1, **caractérisé en ce qu'**au moins une partie du rotor (51) s'étend à l'intérieur d'un volume défini par le stator (53), ladite au moins partie de rotor (51) portant une masse magnétique (55).

3. Dispositif de protection (3) selon la revendication 1 ou 2, **caractérisé en ce que** la portion d'entraînement (513) présente un diamètre moyen de valeur supérieure à la valeur du diamètre moyen de la portion d'actionnement (511).

4. Dispositif de protection (3) d'un capteur optique (13) pour véhicule automobile (100), ledit capteur optique (13) comprenant une optique (14), le dispositif (3) comportant :
- un boitier (6) monté mobile en rotation autour d'un axe de rotation (A1) et présentant un logement (19) configuré pour recevoir le capteur optique (13),
- un élément optique (9) solidaire du boitier (6) et configuré pour être disposé dans le champ de vision du capteur optique (13), et
- un actionneur (5) couplé au boitier (6) pour entrainer en rotation le boitier (6) et l'élément optique (9), l'actionneur (5) comportant un rotor (51) et un stator (53) configurés de sorte que l'actionneur est un moteur à rotor interne,
le dispositif de protection (3) étant **caractérisé en ce qu'**il comporte une pièce intermédiaire (54) formant liaison entre le boîtier (6) et le rotor (51),**en ce que** le rotor (51) comporte une portion d'actionnement (511) portant une masse magnétique (55) et **en ce que** la pièce intermédiaire (54) comporte une portion d'entraînement (513) reliée de façon solidaire au boîtier (6) et une portion de guidage (512) reliant la portion d'entraînement à la portion d'actionnement du rotor.

5. Dispositif de protection (3) selon la revendication précédente, **caractérisé en ce que** la pièce intermédiaire (54) présente une couronne de recouvrement (540) prolongeant la portion de guidage (512) et recouvrant l'une des extrémités du stator.

6. Dispositif de protection (3) selon l'une des revendications précédentes, **caractérisé en ce que** l'actionneur (5) est un moteur creux.

7. Dispositif de protection (3) selon la revendication précédente, **caractérisé en ce que** le capteur optique (13) est prolongé à une extrémité axiale par une queue de support (17) logé au moins partiellement à l'intérieur du rotor (51) interne au moteur creux.

8. Dispositif de protection (3) selon l'une des revendications précédentes, **caractérisé en ce qu'**il comporte une partie mobile (31) et une partie fixe (33), la partie mobile (31) comportant au moins le rotor (51) et le boîtier (6) et la partie fixe comportant au moins le stator (53) et **caractérisé en ce qu'**il comporte au moins un roulement (27, 28), de préférence deux, agencé entre la partie mobile (31) et la partie fixe (33).

9. Dispositif de protection (3) selon la revendication précédente, en combinaison avec la revendication 7, **caractérisé en ce qu'**au moins l'un des roulements (27, 28) est agencé entre le rotor (51) et la queue de support (17).

10. Dispositif de protection (3) selon l'une des revendications précédentes, en combinaison avec la revendication 7, **caractérisé en ce que** le stator (53) comporte une paroi transversale (531) perpendiculaire à l'axe de rotation du boitier et disposée à l'opposé de l'élément optique (9), la paroi transversale comportant un manchon (532) de réception d'une extrémité de la queue de support (17).

11. Système d'assistance à la conduite comportant un capteur optique et un dispositif de protection du capteur optique selon l'une des revendications précédentes.

## Patentansprüche

1. Schutzvorrichtung (3) eines optischen Sensors (13) für ein Kraftfahrzeug (100), wobei der optische Sensor (13) eine Optik (14) beinhaltet, wobei die Vorrichtung (3) umfasst:
- ein Gehäuse (6), das drehbeweglich um eine Drehachse (A1) gelagert ist und eine Aufnahme (19) aufweist, die dazu ausgestaltet ist, den optischen Sensor (13) aufzunehmen,
- ein optisches Element (9), das mit dem Gehäuse (6) fest verbunden ist und dazu ausgestaltet ist, im Sichtfeld des optischen Sensors (13) angeordnet zu sein, und
- einen Aktor (5), der mit dem Gehäuse (6) gekoppelt ist, um das Gehäuse (6) und das optische Element (9) drehanzutreiben, wobei der Aktor (5) einen Rotor (51) und einen Stator (53) umfasst, die so ausgestaltet sind, dass der Aktor ein Innenläufermotor ist,
wobei die Schutzvorrichtung (3) **dadurch gekennzeichnet ist, dass** das Gehäuse (6) direkt an dem Rotor (51) befestigt ist und dass der Rotor (51) drei aufeinander folgende Abschnitte umfasst, die einen Betätigungsabschnitt (511), der eine magnetische Masse (55) trägt, einen Führungsabschnitt (512) und einen Antriebsabschnitt (513), der fest mit dem Gehäuse (6) verbunden ist, bilden.

2. Schutzvorrichtung (3) nach Anspruch 1, **dadurch gekennzeichnet, dass** sich mindestens ein Teil des Rotors (51) im Innern eines Volumens, das durch den Stator (53) definiert wird, erstreckt, wobei der mindestens eine Teil des Rotors (51) eine magnetische Masse (55) trägt.

3. Schutzvorrichtung (3) nach Anspruch 1 oder 2, **dadurch gekennzeichnet, dass** der Antriebsabschnitt (513) einen mittleren Durchmesser mit einem Wert aufweist, der größer als der Wert des mittleren Durchmessers des Betätigungsabschnitts (511) ist.

4. Schutzvorrichtung (3) eines optischen Sensors (13) für ein Kraftfahrzeug (100), wobei der optische Sensor (13) eine Optik (14) beinhaltet, wobei die Vorrichtung (3) umfasst:
- ein Gehäuse (6), das drehbeweglich um eine Drehachse (A1) gelagert ist und eine Aufnahme (19) aufweist, die dazu ausgestaltet ist, den optischen Sensor (13) aufzunehmen,
- ein optisches Element (9), das mit dem Gehäuse (6) fest verbunden ist und dazu ausgestaltet ist, im Sichtfeld des optischen Sensors (13) angeordnet zu sein, und
- einen Aktor (5), der mit dem Gehäuse (6) gekoppelt ist, um das Gehäuse (6) und das optische Element (9) drehanzutreiben, wobei der Aktor (5) einen Rotor (51) und einen Stator (53) umfasst, die so ausgestaltet sind, dass der Aktor ein Innenläufermotor ist,
wobei die Schutzvorrichtung (3) **dadurch gekennzeichnet ist, dass** sie ein Zwischenteil (54) umfasst, das eine Verbindung zwischen dem Gehäuse (6) und dem Rotor (51) bildet, dass der Rotor (51) einen Betätigungsabschnitt (511) umfasst, der eine magnetische Masse (55) trägt, und dass das Zwischenteil (54) einen Antriebsabschnitt (513), der fest mit dem Gehäuse (6) verbunden ist, und einen Führungsabschnitt (512), der den Antriebsabschnitt mit dem Betätigungsabschnitt des Rotors verbindet, umfasst.

5. Schutzvorrichtung (3) nach dem vorhergehenden Anspruch, **dadurch gekennzeichnet, dass** das Zwischenteil (54) einen Abdeckkranz (540) aufweist, der den Führungsabschnitt (512) verlängert und eines der Enden des Stators abdeckt.

6. Schutzvorrichtung (3) nach einem der vorhergehenden Ansprüche, **dadurch gekennzeichnet, dass** der Aktor (5) ein Hohlmotor ist.

7. Schutzvorrichtung (3) nach dem vorhergehenden Anspruch, **dadurch gekennzeichnet, dass** der optische Sensor (13) an einem axialen Ende durch einen Stützschaft (17) verlängert wird, der mindestens teilweise im Inneren des Rotors (51) in dem Hohlmotor aufgenommen ist.

8. Schutzvorrichtung (3) nach einem der vorhergehenden Ansprüche, **dadurch gekennzeichnet, dass** sie einen beweglichen Teil (31) und einen feststehenden Teil (33) umfasst, wobei der bewegliche Teil (31) mindestens den Rotor (51) und das Gehäuse (6) umfasst und wobei der feststehende Teil mindestens den Stator (53) umfasst, und **dadurch gekennzeichnet, dass** sie mindestens ein Lager (27, 28) umfasst, bevorzugt zwei, das zwischen dem beweglichen Teil (31) und dem feststehenden Teil (33) eingerichtet ist.

9. Schutzvorrichtung (3) nach dem vorhergehenden Anspruch in Verbindung mit Anspruch 7, **dadurch gekennzeichnet, dass** mindestens eines der Lager (27, 28) zwischen dem Rotor (51) und dem Stützschaft (17) eingerichtet ist.

10. Schutzvorrichtung (3) nach einem der vorhergehenden Ansprüche in Verbindung mit Anspruch 7, **dadurch gekennzeichnet, dass** der Stator (53) eine Querwand (531) umfasst, die senkrecht zu der Drehachse des Gehäuses verläuft und entgegengesetzt zu dem optischen Element (9) angeordnet ist, wobei die Querwand eine Hülse (532) zum Aufnehmen eines Endes des Stützschafts (17) umfasst.

11. Fahrassistenzsystem, umfassend einen optischen Sensor und eine Schutzvorrichtung des optischen Sensors nach einem der vorhergehenden Ansprüche.

## Claims

1. A device (3) for protecting an optical sensor (13) for a motor vehicle (100), said optical sensor (13) comprising an optic (14), **characterized in that** the device (3) includes:
- a casing (6) mounted rotatably about a rotation axis (A1) and having a housing (19) configured to receive the optical sensor (13),
- an optical element (9) attached to the casing (6) and configured to be placed in the field of vision of the optical sensor (13), and
- an actuator (5) coupled to the casing (6) in order to rotate the casing (6) and the optical element (9), the actuator (5) including a rotor (51) and a stator (53) which are configured such that the actuator is a motor having an internal rotor,
the protecting device (3) being **characterized by** the casing (6) is fixed directly on the rotor (51) and **in that** the rotor (51) three successive portions forming an actuating portion (511) carrying a magnetic mass (55), a guide portion (512) and a drive portion (513) attached to the casing (6).

2. The protecting device (3) as claimed in claim 1, **characterized in that** at least part of the rotor (51) extends inside a volume defined by the stator (53), said at least part of the rotor (51) carrying a magnetic mass (55).

3. The protecting device (3) as claimed in claim 1 or 2, **characterized in that** the drive portion (513) has an average diameter with a value greater than the value of the average diameter of the actuating portion (511).

4. The protecting device (3) of an optical sensor (13) for a motor vehicle (100), the said optical sensor (13)
- a casing (6) mounted rotatably about a rotation axis (A1) and having a housing (19) configured to receive the optical sensor (13),
- an optical element (9) integral with the casing (6) and configured to be placed in the field of vision of the optical sensor (13), and
- an actuator (5) coupled to the casing (6) to rotate the casing (6) and the optical element (9), the actuator (5) including a rotor (51) and a stator (53) configured such that the actuator is a motor having an internal rotor
the protecting device (3) being **characterized in that** it includes an intermediate piece (54) forming a link between the casing (6) and the rotor (51).
**in that** the rotor (51) includes an actuating portion (511) carrying a magnetic mass (55) and **in that** the intermediate piece (54) includes a drive portion (513) attached to the casing (6) and a guide portion (512) linking the drive portion to the actuating portion of the rotor.

5. The protecting device (3) as claimed in the preceding claim, **characterized in that** the intermediate piece (54) has an overlapping ring (540) extending the guide portion (512) and overlapping one of the ends of the stator.

6. The protecting device (3) as claimed in one of the preceding claims, **characterized in that** the actuator (5) is a hollow motor.

7. The protecting device (3) as claimed in the one of the preceding claims, **characterized in that** the optical sensor (13) is extended at one axial end by a support shank (17) housed at least partially inside the rotor (51) internal to the hollow motor.

8. The protecting device (3) as claimed in one of the preceding claims, **characterized in that** it includes a mobile part (31) and a fixed part (33), the mobile part (31) including at least the rotor (51) and the casing (6), and the fixed part including at least the stator (53) and **characterized in that** it includes at least one rolling bearing (27, 28), preferably two, arranged between the mobile part (31) and the fixed part (33).

9. The protecting device (3) as claimed in the preceding claim, in combination with claim 7, **characterized in that** at least one of the rolling bearings (27, 28) is arranged between the rotor (51) and the support shank (17).

10. The protecting device (3) as claimed in one of the preceding claims, in combination with claim 7, **characterized in that** the stator (53) includes a transverse wall (531) perpendicular to the rotation axis of the casing and placed in the opposite direction to the optical element (9), the transverse wall including a sleeve (532) for receiving an end of the support shank (17).

11. A driving assistance system including an optical sensor and a device for protecting the optical sensor as claimed in one of the preceding claims.
